# EUROPÄISCHE PATENTSCHRIFT

(11) **EP 3 242 048 B1**
(45) Veröffentlichungstag und Bekanntmachung des Hinweises auf die Patenterteilung: **08.12.2021**
(21) Anmeldenummer: 17164919.7
(22) Anmeldetag: 05.04.2017
(51) Int. Cl.: F16C 33/10, F16C 37/00, F16N 7/40, F16N 39/02

(54) **VORRICHTUNG MIT EINEM REIBKONTAKT UND VERFAHREN ZUM BETREIBEN EINER VORRICHTUNG MIT EINEM REIBKONTAKT**
DEVICE WITH A FRICTIONAL CONTACT AND METHOD FOR OPERATING A DEVICE COMPRISING A FRICTIONAL CONTACT
DISPOSITIF COMPRENANT UN CONTACT DE FRICTION ET PROCÉDÉ DE FONCTIONNEMENT D'UN DISPOSITIF COMPRENANT UN CONTACT DE FRICTION

(30) Priorität: 13.04.2016 DE 102016206139
(43) Veröffentlichungstag der Anmeldung: 08.11.2017
(73) Patentinhaber: Robert Bosch GmbH, 70442 Stuttgart (DE)
(72) Erfinder: Dornhoefer, Gerd, 71229 Leonberg (DE); Klima, Joachim, 77815 Buehl (DE); Hinterkausen, Markus, 71696 Moeglingen (DE)

(56) Entgegenhaltungen:
- EP-A1- 2 703 662
- EP-A2- 0 104 159
- WO-A1-2016/047159
- JP-A- S5 737 192
- JP-U- S5 258 355

## Beschreibung

Die Erfindung betrifft eine Vorrichtung mit einem Reibkontakt. Die Erfindung betrifft des Weiteren ein Verfahren zum Betreiben einer Vorrichtung mit einem Reibkontakt.

### Stand der Technik

Zur Kühlung von Kontakten bzw. tribologischen Kontakten sind konvektive Kühlmechanismen wie beispielsweise Kühlkörper bekannt, bei denen eine Wärmeabgabe an ein Umgebungsfluid, in der Regel Luft, durch eine große Oberfläche verbessert wird. Als bekannt gelten des Weiteren Wärmerohre, die große Wärmeströme von einem warmen Ort zu einem kalten Ort transportieren. Diese basieren auf dem Verdampfungs-/Kondensationsprinzip und müssen daher komplett geschlossen sein. Generell sind in verschiedensten Anwendungen Kühlkreisläufe, die eine Rückführung eines Kühlmediums einschließen, bekannt.

In Reibkontakten wird eine Reibleistung zum größten Teil in Wärme umgesetzt. Dies führt zu einer Temperaturerhöhung der Kontaktpartner des Reibkontaktes und eines Schmierstoffes, wobei die Temperaturerhöhung in den meisten Anwendungsfällen ohne technischen Nutzen, in vielen Anwendungsfällen technisch nachteilig ist. Beispielsweise können Materialien aufschmelzen, erweichen oder anderweitig thermisch in Mitleidenschaft gezogen werden. Zudem kann über den Marangoni-Effekt eine Schmierstoffversorgung des Reibkontaktes beeinträchtigt werden bis hin zu einem Systemversagen.

Die Wärme entsteht hauptsächlich durch Festkörperkontakte, wenn Reibkörper sich relativ zueinander bewegen und sich dabei zumindest an Asperiten berühren. Wärme entsteht aber auch durch Scherung des beteiligten Schmierstoffes sowie durch elastische Verformung der beteiligten Körper. Idealerweise ist die Wärmeentstehung zu minimieren. Wenn dies an technischwirtschaftliche Grenzen stößt, ist Wärme abzuführen. Dies geschieht hauptsächlich über Wärmeleitung oder Konvektion.

Eine Wärmeübertragung an eine Umgebungsluft ist - zumindest in unmittelbarer Nähe des Reibkontaktes - in realen Bauteilen zumeist eingeschränkt. Die Abfuhr der im Reibkontakt entstehenden Wärme erfolgt deswegen in der Regel hauptsächlich über die Wärmeleitung der beteiligten Festkörper, insbesondere wenn diese hohe spezifische Wärmeleitfähigkeiten aufweisen. Materialien mit deutlich niedrigeren Wärmeleitzahlen liegen nahe oder im Bereich der Wärmeleitfähigkeit von gängigen Schmierstoffen. In diesem Fall trägt die Wärmeleitung im Schmierstoff in ähnlichem Maße wie die in den Kontaktkörpern zur Wärmeabfuhr bei.

Die EP 25 08 778 A2 offenbart ein Zahnrad, das in einer Drehachse gelagert ist und an dessen Umfang bevorzugt eine Vielzahl von Zähnen zum Übertragen eines Drehmoments an ein mit dem Zahnrad zusammenwirkendes Gegenelement angeordnet sind, wobei ein Reibbereich zwischen einem Zahn und dem Gegenelement an einer Zahnflankenoberfläche mit Schmiermittel versehen ist. Es ist vorgesehen, dass an der Zahnflankenoberfläche eine Längsrille zur Zuführung des Schmiermittels in Richtung zum Reibblech ausgebildet ist.

EP 0104159 A2 offenbart, dass die Lauffläche (3) über die Laufflächenbreite verteilte, nutenartige Ausnehmungen aufweist, die gegenüber der Laufrichtung höchstens unter einem Winkel (α) von 20° geneigt sind und mit dem bewegten Teil den Aufbau eines hydrodynamischen Mindestdruckes sicherstellende Kanäle für das Schmiermittel bilden.

WO 2016/047159 A1 offenbart, dass ein Lager und ein Lagerbock vorgesehen sind, die so ausgelegt sind, dass die Verformung des Lagerbocks ohne Mehrkosten verhindert werden kann. Ein Lagerschild ist mit einem Durchgangsrohr versehen, das sich von einer ersten Öffnung erstreckt, die im Hochtemperaturbereich einer Gleitfläche vorgesehen ist, die einer Auflagefläche zugewandt ist, in Richtung weg von der Auflagefläche und eine zweite Öffnung erreicht.

### Offenbarung der Erfindung

Die vorliegende Erfindung schafft eine Vorrichtung mit den Merkmalen des Anspruchs 1.

Die vorliegende Erfindung schafft des Weiteren ein Verfahren mit den Merkmalen des Anspruchs 10.

Eine Idee der vorliegenden Erfindung ist es, einen Schmiermittel-Volumenstrom am Reibkontakt gegenüber dem Stand der Technik zu erhöhen und damit eine verbesserte Wärmeabfuhr von durch den Reibkontakt freigesetzter Wärme mit dem Schmiermittel zu ermöglichen. Durch den erhöhten Volumenstrom des Schmiermittels können des Weiteren in vorteilhafter Weise Mangelschmierungszustände am Reibkontakt verringert werden. Durch die Wärmeabfuhr durch das Schmiermittel kommt es des Weiteren vorzugsweise zu einer geringeren Temperaturentwicklung am Reibkontakt, weniger Verschleiß, einem höheren Wirkungsgrad, einer höheren Lebensdauer sowie weniger Ausfällen. Des Weiteren können in vorteilhafter Weise aktuelle Designgrenzen was Baugröße und Materialien betrifft verschoben werden. So kann beispielsweise eine Baugröße der Kontaktkörper kleiner gewählt werden bzw. die Kontaktkörper leichter ausgebildet sein. Darüber hinaus müssen die verwendeten Materialien eine geringere Temperaturbeständigkeit bzw. Verschleißfestigkeit aufweisen. Dadurch können in vorteilhafter Weise die Herstellungskosten reduziert werden.

Vorteilhafte Ausführungsformen und Weiterbildungen ergeben sich aus den Unteransprüchen sowie aus der Beschreibung unter Bezugnahme auf die Figuren.

Gemäß einer bevorzugten Weiterbildung ist vorgesehen, dass der erste Bereich des Schmiermittelwegs an und benachbart zu dem Reibkontakt angeordnet ist, und der zweite Bereich des Schmiermittelwegs an einem, im Wesentlichen entfernt von dem Reibkontakt angeordneten Abschnitt des Schmiermittelwegs angeordnet ist. Somit kann in vorteilhafter Weise gewährleistet werden, dass die durch den Reibkontakt freigesetzte und durch das Schmiermittel aufgenommene Wärme in dem zweiten, entfernt von dem Reibkontakt angeordneten Bereich des Schmiermittelwegs Wärme abgebbar ist.

Gemäß einer weiteren bevorzugten Weiterbildung ist vorgesehen, dass das Schmiermittel in dem ersten Bereich des Schmiermittelwegs eine erste Temperatur und in dem zweiten Bereich des Schmiermittelwegs eine zweite Temperatur aufweist, welche geringer als die erste Temperatur ist. Aufgrund des Temperaturgefälles zwischen dem ersten Bereich und dem zweiten Bereich des Schmiermittelwegs kann somit in vorteilhafter Weise die durch das Schmiermittel aufgenommene Wärme von dem ersten Bereich in den zweiten Bereich übertragen und dort abgegeben werden.

Durch Vorsehen des zumindest einen Mikrokanals kann in vorteilhafter Weise ein verbesserter und strömungsgünstigerer Transport des Schmiermittels in dem Schmiermittelweg ermöglicht werden.

Durch Vorsehen des zumindest einen Mikrokanals mit einem Oberfläche-zu-Volumen-Verhältnis zwischen 30.000 und 250.000.000 m⁻¹ weist der Mikrokanal in vorteilhafter Weise eine in Relation zum Volumen große Oberfläche auf, über welche Wärme abgebbar ist, wobei die Abkühlung proportional zur Größe der Oberfläche erfolgt. Die Wärme ist beispielsweise an eine Umgebungsluft und/oder an den Kontaktkörper abgebbar, in welchen der Mikrokanal eingebettet ist.

Durch Vorsehen des Zwischenbereichs mit einer in Relation zum Volumen geringen Oberfläche im Vergleich zu dem ersten und zweiten Bereich kann Schmiermittel somit in vorteilhafter Weise durch den jeweiligen Zwischenbereich transportiert werden, ohne dass hierbei viel Wärme abgeführt wird. Bei wachsendem Volumen nimmt das Oberfläche-zu-Volumen-Verhältnis bei allen Körpern ab, da die Oberfläche quadratisch, das Volumen jedoch kubisch wächst. Das ist von Bedeutung für die Abkühlungsgeschwindigkeit verschieden großer Massen. Die Abkühlung erfolgt proportional zur Größe der Oberfläche, die beim Größerwerden jedoch langsamer wächst als das Volumen, so dass größere Massen langsamer abkühlen als kleine. Dies ist beispielsweise dann vorteilhaft, wenn in dem jeweiligen Zwischenbereich des Schmiermittelwegs andere Komponenten verbaut sind, die nicht erwärmt werden sollen.

Gemäß einer weiteren bevorzugten Weiterbildung ist vorgesehen, dass zumindest in dem ersten Bereich des Schmiermittelwegs und dem zweiten Bereich des Schmiermittelwegs der zumindest eine Mikrokanal eine Mehrzahl von in Axialrichtung angeordneten, durchgehend ausgebildeten Unterteilungen aufweist. Durch Vorsehen der Unterteilungen des Mikrokanals kann somit eine Verbesserung eines Kapillareffekts des Mikrokanals erzielt werden.

Gemäß einer weiteren bevorzugten Weiterbildung ist vorgesehen, dass der Reibkontakt durch eine Relativbewegung des ersten Kontaktkörpers zu dem zweiten Kontaktkörper mit Schmiermittel versorgbar ist, wobei durch an dem ersten Kontaktkörper anhaftendes Schmiermittel eine damit verbundene, in dem Schmiermittelweg angeordnete Fluidsäule des Schmiermittels in Richtung der Relativbewegung förderbar ist. Somit ist der Reibkontakt durch die Relativbewegung des ersten Kontaktkörpers zu dem zweiten Kontaktkörper selbstschmierend ausgebildet und benötigt somit in vorteilhafter Weise keine externe Vorrichtung zum Erzeugen einer Bewegung durch einen Transport des Schmiermittels im Schmiermittelweg.

Gemäß einer weiteren bevorzugten Weiterbildung ist vorgesehen, dass der Reibkontakt durch einen Kapillareffekt einer an der Oberfläche des zweiten

Kontaktkörpers zumindest abschnittsweise ausgebildeten Strukturierung zur Aufnahme von Schmiermittel mit Schmiermittel versorgbar ist. Somit kann in vorteilhafter Weise ein alternativer selbstschmierender Reibkontakt bereitgestellt werden. Besonders vorteilhaft bei der Nutzung des Kapillareffekts ist, dass bei einem Reißen der Fluidsäule durch den Kapillareffekt weiterhin ein fortlaufender Transport der Fluidsäule zum Reibkontakt ermöglicht werden kann.

Gemäß einer weiteren bevorzugten Weiterbildung ist vorgesehen, dass eine Temperatur des in dem zweiten Bereich des Schmiermittelwegs angeordneten Schmiermittels durch eine auf den zweiten Bereich des Schmiermittelwegs auftreffende Luftströmung kühlbar ist. Somit wird in vorteilhafter Weise nicht nur der Schmiermittelweg zur Kühlung des Schmiermittels verwendet, sondern ebenfalls ein weiteres externes Kühlmedium. Dadurch kann eine zusätzliche Verbesserung der Kühlung der Temperatur des Schmiermittels erreicht werden.

Gemäß einer weiteren bevorzugten Weiterbildung ist vorgesehen, dass die in dem ersten Bereich freigesetzte Wärme durch den Reibkontakt freisetzbar ist. Somit ist die durch den Reibkontakt freigesetzte Wärme in vorteilhafter Weise durch das Schmiermittel aufnehmbar.

Gemäß einer weiteren bevorzugten Weiterbildung ist vorgesehen, dass die Schmiermittelversorgung als geschlossener Schmiermittelkreislauf ausgebildet ist. Somit kann das Schmiermittel durch Zirkulation in dem geschlossenen Schmiermittelkreislauf abgekühlt und anschließend dem Reibkontakt wieder zugeführt werden.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
- Fig. 1: eine Querschnittsdarstellung einer Vorrichtung mit einem Reibkontakt gemäß einer bevorzugten Ausführungsform der Erfindung;
- Fig. 2: eine schematische Darstellung der Vorrichtung mit dem Reibkontakt gemäß der bevorzugten Ausführungsform der Erfindung;
- Fig. 3: eine schematische Darstellung der Vorrichtung mit dem Reibkontakt gemäß einer weiteren bevorzugten Ausführungsform der Erfindung;
- Fig. 4a: eine Querschnittsdarstellung eines Mikrokanals eines Schmiermittelwegs der Vorrichtung mit dem Reibkontakt gemäß einer weiteren bevorzugten Ausführungsform der Erfindung;
- Fig. 4b: eine Querschnittsdarstellung eines Mikrokanals eines Schmiermittelwegs der Vorrichtung mit dem Reibkontakt gemäß einer weiteren bevorzugten Ausführungsform der Erfindung;
- Fig. 4c: eine Querschnittsdarstellung eines Mikrokanals eines Schmiermittelwegs der Vorrichtung mit dem Reibkontakt gemäß einer weiteren bevorzugten Ausführungsform der Erfindung;

- Fig. 5: ein Ablaufdiagramm eines Verfahrens zum Betreiben der Vorrichtung mit dem Reibkontakt gemäß der vorstehend genannten Ausführungsformen der Erfindung.

In den Figuren der Zeichnungen bezeichnen gleiche Bezugszeichen gleiche oder funktionsgleiche Elemente, Bauteile oder Komponenten, soweit nichts Gegenteiliges angegeben ist.

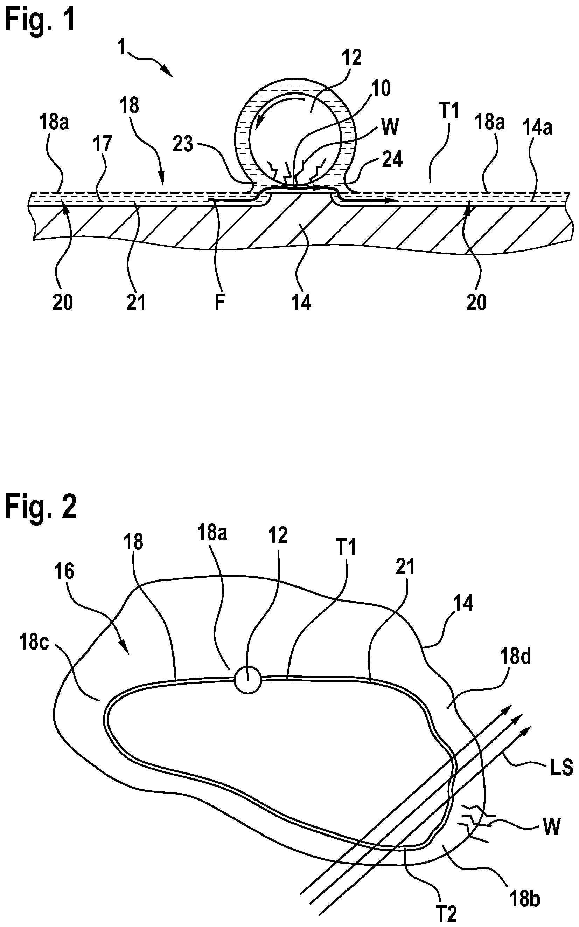

Fig. 1 zeigt eine Querschnittsdarstellung der Vorrichtung mit einem Reibkontakt gemäß einer bevorzugten Ausführungsform der Erfindung.

Die Vorrichtung 1 weist vorzugsweise einen Reibkontakt 10 mit einem ersten Kontaktkörper 12 und einem zweiten Kontaktkörper 14 auf. Der erste Kontaktkörper 12 ist vorzugsweise relativ zum zweiten Kontaktkörper 14 verstellbar. Eine Relativbewegung des ersten Kontaktkörpers 12 zum zweiten Kontaktkörper 14 ist in der vorliegenden Ausführungsform rotatorisch. Alternativ kann die Relativbewegung des ersten Kontaktkörpers 12 zum zweiten Kontaktkörper 14 beispielsweise translatorisch sein.

Der erste Kontaktkörper 12 weist vorzugsweise einen im Wesentlichen runden Querschnitt auf. Der zweite Kontaktkörper 14 weist vorzugsweise einen im Wesentlichen ebenen Querschnitt auf. Benachbart zu dem Reibkontakt 10 ist eine zu dem Reibkontakt 10 führende Schmiermittelversorgung 16 des Reibkontaktes zum Versorgen des Reibkontaktes 10 mit Schmiermittel 17 angeordnet. Die Schmiermittelversorgung 16 ist vorzugsweise als geschlossener Schmiermittelkreislauf ausgebildet. Alternativ kann die Schmiermittelversorgung 16 beispielsweise als offener Schmiermittelweg ausgebildet sein.

Die Schmiermittelversorgung 16 weist an und benachbart zu dem Reibkontakt 10 einen ersten Bereich 18a des Schmiermittelwegs 18 und an einem, im Wesentlichen entfernt von dem Reibkontakt 10 angeordneten (in Fig. 1 nicht gezeigten) Abschnitt des Schmiermittelwegs 18 einen zweiten Bereich auf.

Der erste Bereich 18a des Schmiermittelwegs 18 ist dazu ausgebildet, durch den Reibkontakt 10 freigesetzte Wärme W durch das Schmiermittel 17 aufzunehmen. Der zweite (in Fig. 1 nicht gezeigte) Bereich des Schmiermittelwegs 18 ist dazu ausgebildet, durch das Schmiermittel 17 aufgenommene Wärme W an eine Umgebung abzugeben.

Der Reibkontakt 10 ist vorzugsweise durch die Relativbewegung des ersten Kontaktkörpers 12 zu dem zweiten Kontaktkörper 14 mit Schmiermittel 17 versorgbar. An dem ersten Kontaktkörper 12 anhaftendes Schmiermittel 17 ist dabei dazu ausgebildet, eine mit dem Schmiermittel 17 verbundene, in der Schmiermittelversorgung 16 angeordnete Fluidsäule des Schmiermittels 17 in Richtung der Relativbewegung zu fördern.

Die Schmiermittelversorgung 16 ist vorzugsweise an einem Abschnitt der Oberfläche 14a des zweiten Kontaktkörpers 14 ausgebildet. Alternativ kann die Schmiermittelversorgung 16 beispielsweise an einer gesamten Oberfläche des zweiten Kontaktkörpers 16 ausgebildet sein oder eine je nach volumetrischer Anforderung des Schmiermittelstroms angepasste Dimension aufweisen.

Die Oberfläche 14a des zweiten Kontaktkörpers 14 weist zum Ausbilden der Schmiermittelversorgung 16 vorzugsweise eine abschnittsweise ausgebildete Strukturierung 20 auf. Die abschnittsweise Strukturierung 20 der Oberfläche 14a des zweiten Kontaktkörpers 14 weist vorzugsweise eine Mehrzahl von Mikrokanälen 21 auf. Alternativ kann beispielsweise ein einzelner Mikrokanal 21 bis zu einer beliebigen Anzahl von Mikrokanälen 21 vorgesehen sein. Die Mehrzahl von Mikrokanälen 21 sind vorzugsweise parallel zueinander angeordnet und enden an einem Zulauf 23 des Reibkontaktes 10. Die Mehrzahl von Mikrokanälen 21 der Schmiermittelversorgung 16 sind des Weiteren vorzugsweise in Verlängerung eines Flusses F des Schmiermittels 17 durch den Reibkontakt 10 angeordnet.

Die in der Schmiermittelversorgung 16 angeordnete Fluidsäule des Schmiermittels 17 bildet vorzugsweise zusammen mit dem an dem ersten Reibkörper 12 anhaftenden Schmiermittel 17 eine zusammenhängende Fluidsäule aus. Aus einem (in Fig. 1 nicht gezeigten) mit der Schmiermittelversorgung 16 verbundenen Schmiermitteldepot ist vorzugsweise Schmiermittel 17 nachförderbar. Alternativ kann das Schmiermitteldepot beispielsweise durch das in einem Schmiermittelweg 18 der Schmiermittelversorgung 16 angeordnete Schmiermittel ausgebildet sein.

Durch die Relativbewegung des ersten Kontaktkörpers 12 zu dem zweiten Kontaktkörper 14 ist somit in vorteilhafter Weise Schmiermittel in Richtung der Relativbewegung förderbar. Der Reibkontakt 10 weist des Weiteren vorzugsweise einen Zulauf 23 zum Zuführen von Schmiermittel 17 und einen Ablauf 24 zum Abführen von Schmiermittel 17 auf. Somit ist durch die Relativbewegung des ersten Kontaktkörpers 12 zu dem zweiten Kontaktkörper 14 eine erforderliche Menge an Schmiermittel 17 zu dem Reibkontakt zuführbar und von dem Reibkontakt 10 abführbar.

Alternativ oder zusätzlich zu der vorstehend genannten Ausführungsform kann der Reibkontakt 10 beispielsweise durch einen Kapillareffekt einer an der Oberfläche 14a des zweiten Kontaktkörpers 14 abschnittsweise ausgebildeten Strukturierung zur Aufnahme von Schmiermittel 17 mit Schmiermittel 17 versorgt werden.

Fig. 2 zeigt eine schematische Darstellung der Vorrichtung mit dem Reibkontakt gemäß der bevorzugten Ausführungsform der Erfindung.

Die Schmiermittelversorgung 16 ist vorzugsweise als geschlossener Schmiermittelkreislauf ausgebildet. Alternativ kann die Schmiermittelversorgung 16 beispielsweise als offener Schmiermittelweg ausgebildet sein.

Die Schmiermittelversorgung 16 weist den Schmiermittelweg 18 auf. Der Schmiermittelweg 18 weist den ersten Bereich 18a auf, in welchem durch den Reibkontakt 10 freigesetzte Wärme W durch das Schmiermittel 17 aufnehmbar ist. Der Schmiermittelweg 18 weist des Weiteren den zweiten Bereich 18b auf, in welchem die durch das Schmiermittel 17 aufgenommene Wärme W abgebbar ist.

Der erste Bereich 18a des Schmiermittelwegs 18 ist vorzugsweise an und benachbart zu dem Reibkontakt 10 angeordnet. Der zweite Bereich 18b des Schmiermittelwegs 18 ist vorzugsweise an einem, im Wesentlichen entfernt von dem Reibkontakt 10 angeordneten Abschnitt des Schmiermittelwegs 18 angeordnet. Das Schmiermittel 17 weist vorzugsweise in dem ersten Bereich 18a des Schmiermittelwegs 18 eine erste Temperatur T1 und in dem zweiten Bereich 18b des Schmiermittelwegs 18 eine zweite Temperatur T2 auf, welche geringer als die erste Temperatur T1 ist, da dem Schmiermittel 17 in dem zweiten Bereich keine Wärme mehr zugeführt wird und das Schmiermittel in dem zweiten Bereich abkühlen kann.

Zwischen dem ersten Bereich 18a des Schmiermittelwegs 18 und dem zweiten Bereich 18b des Schmiermittelwegs 18 ist jeweils ein Zwischenbereich 18c, 18d angeordnet. Eine Oberfläche der Mikrokanäle 21 des Schmiermittelwegs 18 ist in Fig. 2 nicht dargestellt. Ein Oberfläche-zu-Volumen-Verhältnis der Mikrokanäle 21 in dem ersten Bereich 18a und in dem zweiten Bereich 18b des Schmiermittelwegs 18 beträgt vorzugsweise zwischen 30.000 und 250.000.000 m⁻¹. In den Zwischenbereichen 18c, 18d des Schmiermittelwegs 18 beträgt das Oberfläche-zu-Volumen-Verhältnis der Mikrokanäle 21 vorzugsweise zwischen 500 und 600.000 m⁻¹. Somit kann in den Zwischenbereichen die in dem Schmiermittel 17 gespeicherte Wärmeenergie mit dem Schmiermittel 17 transportiert und in dem ersten und zweiten Bereich 18a, 18b des Schmiermittelwegs 18 Wärme abgegeben werden.

Darüber hinaus ist die Temperatur T2 des in dem zweiten Bereich 18b des Schmiermittelwegs 18 angeordneten Schmiermittels 17 durch eine auf den zweiten Bereich 18b des Schmiermittelwegs 18 auftreffende Luftströmung Ls kühlbar. Alternativ sind auch andere Kühlmechanismen bzw. Vorrichtungen zur Kühlung des in dem zweiten Bereich 18b des Schmiermittelwegs 18 angeordneten Schmiermittels denkbar.

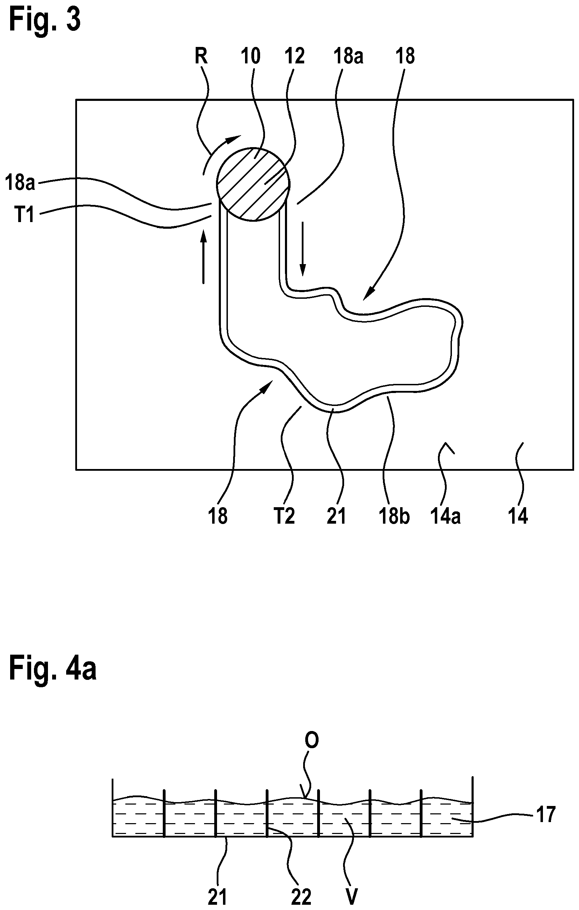

Fig. 3 zeigt eine schematische Darstellung der Vorrichtung mit dem Reibkontakt gemäß einer weiteren bevorzugten Ausführungsform der Erfindung.

Die Schmiermittelversorgung 16 ist vorzugsweise als geschlossener Schmiermittelkreislauf ausgebildet. Alternativ kann die Schmiermittelversorgung 16 beispielsweise als offener Schmiermittelweg ausgebildet sein.

In der vorliegenden Ausführungsform ist der erste Kontaktkörper 12 zu dem zweiten Kontaktkörper 14 derart angeordnet, dass eine Stirnfläche des ersten Kontaktkörpers 12 eine Stirnfläche des zweiten Kontaktkörpers 14 kontaktiert. Der Reibkontakt 10 ist in der vorliegenden Ausführungsform somit im Bereich der Stirnfläche des ersten Kontaktkörpers 12 und der mit dieser kontakt bildenden Stirnfläche des zweiten Kontaktkörpers 14 ausgebildet.

Der erste Kontaktkörper 12 ist vorzugsweise in einer Drehrichtung R drehbar gelagert. Die Mehrzahl von Mikrokanälen 21 verlaufen wie auch in der mit Bezug auf Fig. 2 dargestellten Ausführungsform an der Oberfläche 14a des zweiten Kontaktkörpers 14 und bilden den Schmiermittelweg 18 aus.

Die Schmiermittelversorgung 16 weist an und benachbart zu dem Reibkontakt 10 den ersten Bereich 18a des Schmiermittelwegs 18 und an einem, im Wesentlichen entfernt von dem Reibkontakt 10 angeordneten Abschnitt des Schmiermittelwegs 18 den zweiten Bereich 18b auf.

Der erste Bereich 18a des Schmiermittelwegs 18 ist dazu ausgebildet, durch den Reibkontakt 10 freigesetzte Wärme W durch das Schmiermittel 17 aufzunehmen.

Der zweite Bereich 18b des Schmiermittelwegs 18 ist dazu ausgebildet, durch das Schmiermittel 17 aufgenommene Wärme W an eine Umgebung abzugeben.

Das Schmiermittel 17 weist vorzugsweise in dem ersten Bereich 18a des Schmiermittelwegs 18 die erste Temperatur T1 und in dem zweiten Bereich 18b des Schmiermittelwegs 18 die zweite Temperatur T2 auf, welche geringer als die erste Temperatur T1 ist, da dem Schmiermittel 17 in dem zweiten Bereich keine Wärme mehr zugeführt wird und das Schmiermittel in dem zweiten Bereich abkühlen kann.

Fig. 4a zeigt eine Querschnittsdarstellung eines Mikrokanals eines Schmiermittelwegs der Vorrichtung mit dem Reibkontakt gemäß einer weiteren bevorzugten Ausführungsform der Erfindung. In der vorliegenden Darstellung ist ein einzelner Mikrokanal 21 gezeigt, welcher eine Mehrzahl von in Axialrichtung angeordneten, durchgehend ausgebildeten Unterteilungen aufweist. Alternativ können benachbart zu dem einzelnen Mikrokanal 21 beispielsweise weitere Mikrokanäle angeordnet sein. Der Mikrokanal 21 weist in der vorliegenden Ausführungsform ein Oberfläche-zu-Volumen-Verhältnis von vorzugsweise 30.000 und 250.000.000 m⁻¹ auf. Alternativ kann beispielsweise ein anderes geeignetes Oberfläche-zu-Volumen-Verhältnis vorgesehen sein. Somit weist das in dem Mikrokanal 21 angeordnete Schmiermittel 17 in vorteilhafter Weise eine in Relation zum Volumen V große Oberfläche O auf, was eine Kühlwirkung des Schmiermittels 17 begünstigt.

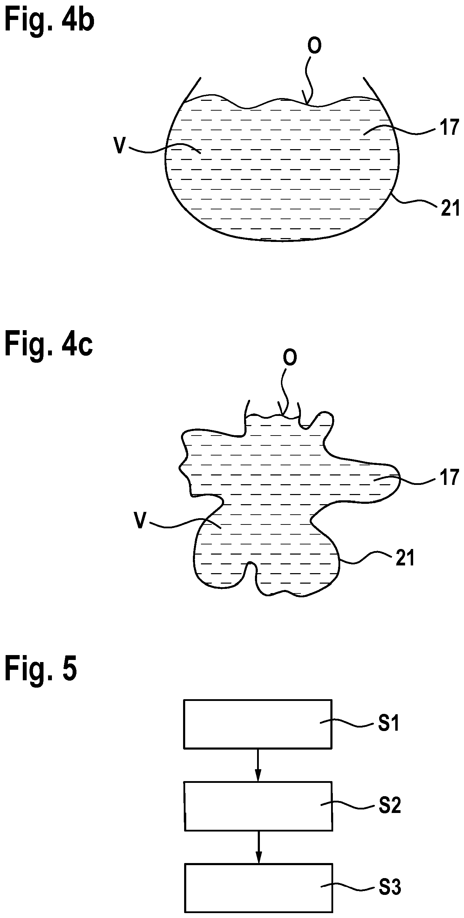

Fig. 4b zeigt eine Querschnittsdarstellung eines Mikrokanals eines Schmiermittelwegs der Vorrichtung mit dem Reibkontakt gemäß einer weiteren bevorzugten Ausführungsform der Erfindung. Der Mikrokanal 21 weist in der vorliegenden Ausführungsform ein Oberfläche-zu-Volumen-Verhältnis von vorzugsweise 500 bis 600.000 m⁻¹ auf. Alternativ kann beispielsweise ein anderes geeignetes Oberfläche-zu-Volumen-Verhältnis vorgesehen sein. Diese Ausbildung des Mikrokanals 21 wird in vorteilhafter Weise im Bereich der Zwischenbereiche 18c, 18d des Schmiermittelwegs 18 eingesetzt.

Fig. 4c zeigt eine Querschnittsdarstellung eines Mikrokanals eines Schmiermittelwegs der Vorrichtung mit dem Reibkontakt gemäß einer weiteren bevorzugten Ausführungsform der Erfindung. Der Mikrokanal 21 weist in der vorliegenden Ausführungsform eine unregelmäßige Querschnittsgeometrie auf. Das Oberfläche-zu-Volumen-Verhältnis beträgt vorzugsweise 500 bis 600.000 m⁻¹.

Alternativ kann beispielsweise ein anderes geeignetes Oberfläche-zu-Volumen-Verhältnis vorgesehen sein. Es ist daher vorteilhaft, den Mikrokanal 21 mit der vorliegend gezeigten Querschnittsform in den jeweiligen Zwischenbereichen 18c, 18d des Schmiermittelwegs 18 zum Transport der in dem Schmiermittel gespeicherten Wärmeenergie zu dem zweiten Bereich 18b einzusetzen Durch Vorsehen des Zwischenbereichs 18c mit einer in Relation zum Volumen V geringen Oberfläche O im Vergleich zu dem ersten und zweiten Bereich 18a, 18b kann Schmiermittel somit in vorteilhafter Weise durch den jeweiligen Zwischenbereich 18c transportiert werden, ohne dass hierbei viel Wärme abgeführt wird.

Fig. 5 zeigt ein Ablaufdiagramm eines Verfahrens zum Betreiben der Vorrichtung mit dem Reibkontakt gemäß der vorstehend genannten Ausführungsformen der Erfindung.

Das Verfahren zum Betreiben der Vorrichtung mit dem Reibkontakt umfasst ein Versetzen S1 eines ersten Kontaktkörpers des Reibkontaktes in eine Bewegung relativ zu einem zweiten Kontaktkörper des Reibkontaktes, während der Reibkontakt mittels einer Schmiermittelversorgung mit Schmiermittel versorgt wird. Das Verfahren umfasst überdies ein Aufnehmen S2 von freigesetzter Wärme durch das Schmiermittel in einem ersten Bereich eines Schmiermittelwegs der Schmiermittelversorgung. Das Verfahren umfasst des Weiteren ein Abgeben S3 von durch das Schmiermittel aufgenommener Wärme in einem zweiten Bereich des Schmiermittelwegs.

Obwohl die vorliegende Erfindung anhand bevorzugter Ausführungsbeispiele vorstehend beschrieben wurde, ist sie nicht darauf beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

Beispielsweise ist eine Geometrie der Strukturierung der Oberfläche des zweiten Kontaktkörpers an bauliche Anforderungen des Reibkontaktes bzw. des ersten Kontaktkörpers und des zweiten Kontaktkörpers anpassbar.

## Patentansprüche

1. Vorrichtung (1) mit einem Reibkontakt (10), mit einem ersten Kontaktkörper (12) und einem zweiten Kontaktkörper (14), wobei der erste Kontaktkörper (12) relativ zum zweiten Kontaktkörper (14) verstellbar ist, und mit einer Schmiermittelversorgung (16) des Reibkontaktes (10), mittels welcher der Reibkontakt (10) mit Schmiermittel (17) versorgbar ist, wobei die Schmiermittelversorgung (16) einen Schmiermittelweg (18) aufweist, mit einem ersten Bereich (18a), in welchem eine darin freigesetzte Wärme (W) durch das Schmiermittel (17) aufnehmbar ist, und mit einem zweiten Bereich (18b), in welchem die durch das Schmiermittel (17) aufgenommene Wärme (W) abgebbar ist, **dadurch gekennzeichnet, dass** der Schmiermittelweg (18) eine an einer Oberfläche (14a) des zweiten Kontaktkörpers (14) zumindest abschnittsweise ausgebildete isotrope oder anisotrope Strukturierung (20) aufweist, wobei die Strukturierung (20) zumindest einen Mikrokanal (21) aufweist, wobei zwischen dem ersten Bereich (18a) des Schmiermittelwegs (18) und dem zweiten Bereich (18b) des Schmiermittelwegs (18) jeweils ein Zwischenbereich (18c, 18d) angeordnet ist, wobei der zumindest eine Mikrokanal (21) in dem ersten Bereich (18a) und dem zweiten Bereich (18b) des Schmiermittelwegs (18) ein Oberfläche-zu-Volumen-Verhältnis zwischen 30.000 und 250.000.000 m⁻¹ aufweist, und wobei in dem jeweiligen Zwischenbereich (18c, 18d) des Schmiermittelwegs (18) der zumindest eine Mikrokanal ein Oberfläche-zu-Volumen-Verhältnis zwischen 500 und 600.000 m⁻¹ aufweist.

2. Vorrichtung nach Anspruch 1, **dadurch gekennzeichnet, dass** der erste Bereich (18a) des Schmiermittelwegs (18) an und benachbart zu dem Reibkontakt (10) angeordnet ist, und der zweite Bereich (18b) des Schmiermittelwegs (18) an einem, im Wesentlichen entfernt von dem Reibkontakt (10) angeordneten Abschnitt des Schmiermittelwegs (18) angeordnet ist.

3. Vorrichtung nach Anspruch 1 oder 2, **dadurch gekennzeichnet, dass** das Schmiermittel (17) in dem ersten Bereich (18a) des Schmiermittelwegs (18) eine erste Temperatur (T1) und in dem zweiten Bereich (18b) des Schmiermittelwegs (18) eine zweite Temperatur (T2) aufweist, welche geringer als die erste Temperatur (T1) ist.

4. Vorrichtung nach Anspruch 1, **dadurch gekennzeichnet, dass** zumindest in dem ersten Bereich (18a) des Schmiermittelwegs (18) und dem zweiten Bereich (18b) des Schmiermittelwegs (18) der zumindest eine Mikrokanal (21) eine Mehrzahl von in Axialrichtung angeordneten, durchgehend ausgebildeten Unterteilungen (22) aufweist.

5. Vorrichtung nach einem der vorhergehenden Ansprüche, **dadurch gekennzeichnet, dass** der Reibkontakt (10) durch eine Relativbewegung des ersten Kontaktkörpers (12) zu dem zweiten Kontaktkörper (14) mit Schmiermittel (17) versorgbar ist, wobei durch an dem ersten Kontaktkörper (12) anhaftendes Schmiermittel (17) eine damit verbundene, in dem Schmiermittelweg (18) angeordnete Fluidsäule des Schmiermittels (17) in Richtung der Relativbewegung förderbar ist.

6. Vorrichtung nach einem der Ansprüche 1 oder 4, **dadurch gekennzeichnet, dass** der Reibkontakt (10) durch einen Kapillareffekt einer an der Oberfläche (14a) des zweiten Kontaktkörpers (14) zumindest abschnittsweise ausgebildeten Strukturierung (20) zur Aufnahme von Schmiermittel (17) mit Schmiermittel (17) versorgbar ist.

7. Vorrichtung nach einem der vorhergehenden Ansprüche, **dadurch gekennzeichnet, dass** eine Temperatur (T2) des in dem zweiten Bereich (18b) des Schmiermittelwegs (18) angeordneten Schmiermittels (17) durch eine auf den zweiten Bereich (18b) des Schmiermittelwegs (18) auftreffende Luftströmung (Ls) kühlbar ist.

8. Vorrichtung nach einem der vorhergehenden Ansprüche, **dadurch gekennzeichnet, dass** die in dem ersten Bereich (18a) freigesetzte Wärme durch den Reibkontakt (10) freisetzbar ist.

9. Vorrichtung nach einem der vorhergehenden Ansprüche, **dadurch gekennzeichnet, dass** die Schmiermittelversorgung (16) als geschlossener Schmiermittelkreislauf ausgebildet ist.

10. Verfahren zum Betreiben einer Vorrichtung mit einem Reibkontakt (10), mit den Schritten:
Versetzen (S1) eines ersten Kontaktkörpers (12) des Reibkontaktes (10) in eine Bewegung relativ zu einem zweiten Kontaktkörper (14) des Reibkontaktes (10), während der Reibkontakt (10) mittels einer Schmiermittelversorgung (16) mit Schmiermittel (17) versorgt wird;
**gekennzeichnet durch**:
Aufnehmen (S2) von freigesetzter Wärme (W) durch das Schmiermittel (17) in einem ersten Bereich (18a) eines Schmiermittelwegs (18) der Schmiermittelversorgung (16); und
Abgeben (S3) von durch das Schmiermittel (17) aufgenommener Wärme (W) in einem zweiten Bereich (18b) des Schmiermittelwegs (18), wobei der Schmiermittelweg (18) mit einer an einer Oberfläche (14a) des zweiten Kontaktkörpers (14) zumindest abschnittsweise ausgebildeten isotropen oder anisotropen Strukturierung (20) bereitgestellt wird, wobei die Strukturierung (20) mit zumindest einem Mikrokanal (21) bereitgestellt wird, wobei zwischen dem ersten Bereich (18a) des Schmiermittelwegs (18) und dem zweiten Bereich (18b) des Schmiermittelwegs (18) jeweils ein Zwischenbereich (18c, 18d) bereitgestellt wird, wobei der zumindest eine Mikrokanal (21) in dem ersten Bereich (18a) und dem zweiten Bereich (18b) des Schmiermittelwegs (18) mit einem Oberfläche-zu-Volumen-Verhältnis zwischen 30.000 und 250.000.000 m⁻¹ bereitgestellt wird, und wobei in dem jeweiligen Zwischenbereich (18c, 18d) des Schmiermittelwegs (18) der zumindest eine Mikrokanal mit einem Oberfläche-zu-Volumen-Verhältnis zwischen 500 und 600.000 m⁻¹ bereitgestellt wird.

## Claims

1. Device (1) with a frictional contact (10), with a first contact body (12) and second contact body (14), wherein the first contact body (12) can be adjusted relative to the second contact body (14), and with a lubricant supply means (16) for the frictional contact (10), by means of which the frictional contact (10) can be supplied with lubricant (17), wherein the lubricant supply means (16) has a lubricant path (18) with a first region (18a), in which heat (W) released therein can be absorbed by the lubricant (17), and with a second region (18b), in which the heat (W) absorbed by the lubricant (17) can be discharged, **characterized in that** the lubricant path (18) has an isotropic or anisotropic structuring (20) which is at least sectionally formed on a surface (14a) of the second contact body (14), wherein the structuring (20) has at least one micro-channel (21), wherein in each case an intermediate region (18c, 18d) is arranged between the first region (18a) of the lubricant path (18) and the second region (18b) of the lubricant path (18), wherein the at least one micro-channel (21) has a surface area-to-volume ratio of between 30 000 and 250 000 000 m⁻¹ in the first region (18a) and the second region (18b) of the lubricant path (18), and wherein the at least one micro-channel has a surface area-to-volume ratio of between 500 and 600 000 m⁻¹ in the respective intermediate region (18c, 18d) of the lubricant path (18).

2. Device according to Claim 1, **characterized in that** the first region (18a) of the lubricant path (18) is arranged at and adjacent to the frictional contact (10), and the second region (18b) of the lubricant path (18) is arranged at a section of the lubricant path (18) that is arranged substantially at a distance from the frictional contact (10).

3. Device according to Claim 1 or 2, **characterized in that** the lubricant (17) has a first temperature (T1) in the first region (18a) of the lubricant path (18) and has a second temperature (T2) in the second region (18b) of the lubricant path (18), which second temperature is lower than the first temperature (T1).

4. Device according to Claim 1, **characterized in that**, at least in the first region (18a) of the lubricant path (18) and the second region (18b) of the lubricant path (18), the at least one micro-channel (21) has a plurality of partitions (22) of continuous form that are arranged in the axial direction.

5. Device according to one of the preceding claims, **characterized in that** the frictional contact (10) can be supplied with lubricant (17) by way of a relative movement of the first contact body (12) with respect to the second contact body (14), wherein, by way of lubricant (17) adhering to the first contact body (12), a fluid column of the lubricant (17) that is connected thereto and is arranged in the lubricant path (18) can be conveyed in the direction of the relative movement.

6. Device according to either of Claims 1 and 4, **characterized in that** the frictional contact (10) can be supplied with lubricant (17) by way of a capillary effect of a structuring (20) for receiving lubricant (17) that is at least sectionally formed on the surface (14a) of the second contact body (14) .

7. Device according to one of the preceding claims, **characterized in that** a temperature (T2) of the lubricant (17) arranged in the second region (18b) of the lubricant path (18) can be cooled by an air flow (Ls) impinging on the second region (18b) of the lubricant path (18).

8. Device according to one of the preceding claims, **characterized in that** the heat released in the first region (18a) can be released by the frictional contact (10).

9. Device according to one of the preceding claims, **characterized in that** the lubricant supply means (16) is in the form of a closed lubricant circuit.

10. Method for operating a device with a frictional contact (10), comprising the steps of:
setting (S1) a first contact body (12) of the frictional contact (10) in motion relative to a second contact body (14) of the frictional contact (10) while the frictional contact (10) is being supplied, by means of a lubricant supply means (16), with lubricant (17);
**characterized by**:
absorbing (S2) released heat (W) by way of the lubricant (17) in a first region (18a) of a lubricant path (18) of the lubricant supply means (16); and
discharging (S3) in a second region (18b) of the lubricant path (18) heat (W) absorbed by the lubricant (17), wherein the lubricant path (18) is provided with an isotropic or anisotropic structuring (20) which is at least sectionally formed on a surface (14a) of the second contact body (14), wherein the structuring (20) is provided with at least one micro-channel (21), wherein in each case an intermediate region (18c, 18d) is provided between the first region (18a) of the lubricant path (18) and the second region (18b) of the lubricant path (18), wherein the at least one micro-channel (21) is provided with a surface area-to-volume ratio of between 30 000 and 250 000 000 m⁻¹ in the first region (18a) and the second region (18b) of the lubricant path (18), and wherein the at least one micro-channel is provided with a surface area-to-volume ratio of between 500 and 600 000 m⁻¹ in the respective intermediate region (18c, 18d) of the lubricant path (18).

## Revendications

1. Dispositif (1) muni d'un contact de friction (10), muni d'un premier corps de contact (12) et d'un deuxième corps de contact (14), le premier corps de contact (12) étant déplaçable par rapport au deuxième corps de contact (14), et muni d'une alimentation en lubrifiant (16) du contact de friction (10), au moyen de laquelle le contact de friction (10) peut être alimenté en lubrifiant (17), l'alimentation en lubrifiant (16) comprenant une trajectoire de lubrifiant (18), munie d'une première zone (18a), dans laquelle une chaleur (W) qui y est libérée peut être absorbée par le lubrifiant (17), et munie d'une deuxième zone (18b), dans laquelle la chaleur (W) absorbée par le lubrifiant (17) peut être émise, **caractérisé en ce que** la trajectoire de lubrifiant (18) comprend une structuration isotrope ou anisotrope (20) formée au moins en sections sur une surface (14a) du deuxième corps de contact (14), la structuration (20) comprenant au moins un microcanal (21), une zone intermédiaire (18c, 18d) étant agencée respectivement entre la première zone (18a) de la trajectoire de lubrifiant (18) et la deuxième zone (18b) de la trajectoire de lubrifiant (18), l'au moins un microcanal (21) présentant, dans la première zone (18a) et la deuxième zone (18b) de la trajectoire de lubrifiant (18), un rapport surface sur volume compris entre 30 000 et 250 000 000 m⁻¹ et, dans la zone intermédiaire respective (18c, 18d) de la trajectoire de lubrifiant (18), l'au moins un microcanal présentant un rapport surface sur volume compris entre 500 et 600 000 m⁻¹.

2. Dispositif selon la revendication 1, **caractérisé en ce que** la première zone (18a) de la trajectoire de lubrifiant (18) est agencée sur et à côté du contact de friction (10), et la deuxième zone (18b) de la trajectoire de lubrifiant (18) est agencée sur une section de la trajectoire de lubrifiant (18) agencée essentiellement à distance du contact de friction (10).

3. Dispositif selon la revendication 1 ou 2, **caractérisé en ce que** le lubrifiant (17) présente une première température (T1) dans la première zone (18a) de la trajectoire de lubrifiant (18) et une deuxième température (T2), qui est inférieure à la première température (T1), dans la deuxième zone (18b) de la trajectoire de lubrifiant (18).

4. Dispositif selon la revendication 1, **caractérisé en ce qu'**au moins dans la première zone (18a) de la trajectoire de lubrifiant (18) et dans la deuxième zone (18b) de la trajectoire de lubrifiant (18), l'au moins un microcanal (21) comprend une pluralité de subdivisions (22) configurées sous forme continue, agencées dans la direction axiale.

5. Dispositif selon l'une quelconque des revendications précédentes, **caractérisé en ce que** le contact de friction (10) peut être alimenté en lubrifiant (17) par un mouvement relatif du premier corps de contact (12) par rapport au deuxième corps de contact (14), une colonne de fluide du lubrifiant (17) agencée dans la trajectoire de lubrifiant (18), reliée à du lubrifiant (17) adhérant au premier corps de contact (12), pouvant être transportée par celui-ci dans la direction du mouvement relatif.

6. Dispositif selon l'une quelconque des revendications 1 ou 4, **caractérisé en ce que** le contact de friction (10) peut être alimenté en lubrifiant (17) par un effet de capillarité d'une structuration (20) formée au moins en sections sur la surface (14a) du deuxième corps de contact (14) pour l'absorption de lubrifiant (17).

7. Dispositif selon l'une quelconque des revendications précédentes, **caractérisé en ce qu'**une température (T2) du lubrifiant (17) agencé dans la deuxième zone (18b) de la trajectoire de lubrifiant (18) peut être refroidie par un courant d'air (Ls) rencontrant la deuxième zone (18b) de la trajectoire de lubrifiant (18).

8. Dispositif selon l'une quelconque des revendications précédentes, **caractérisé en ce que** la chaleur libérée dans la première zone (18a) peut être libérée par le contact de friction (10).

9. Dispositif selon l'une quelconque des revendications précédentes, **caractérisé en ce que** l'alimentation en lubrifiant (16) est configurée sous la forme d'un circuit de lubrifiant fermé.

10. Procédé d'exploitation d'un dispositif muni d'un contact de friction (10), comprenant les étapes suivantes :
la mise en mouvement (S1) d'un premier corps de contact (12) du contact de friction (10) par rapport au deuxième corps de contact (14) du contact de friction (10), pendant que le contact de friction (10) est alimenté an lubrifiant (17) au moyen d'une alimentation en lubrifiant (16) ;
**caractérisé par** :
l'absorption (S2) de chaleur libérée (W) par le lubrifiant (17) dans une première zone (18a) d'une trajectoire de lubrifiant (18) de l'alimentation en lubrifiant (16) ; et
l'émission (S3) de la chaleur (W) absorbée par le lubrifiant (17) dans une deuxième zone (18b) de la trajectoire de lubrifiant (18), la trajectoire de lubrifiant (18) étant fournie avec une structuration isotrope ou anisotrope (20) formée au moins en sections sur une surface (14a) du deuxième corps de contact (14), la structuration (20) étant fournie avec au moins un microcanal (21), une zone intermédiaire (18c, 18d) étant fournie respectivement entre la première zone (18a) de la trajectoire de lubrifiant (18) et la deuxième zone (18b) de la trajectoire de lubrifiant (18), l'au moins un microcanal (21) étant fourni, dans la première zone (18a) et la deuxième zone (18b) de la trajectoire de lubrifiant (18), avec un rapport surface sur volume compris entre 30 000 et 250 000 000 m⁻¹ et, dans la zone intermédiaire respective (18c, 18d) de la trajectoire de lubrifiant (18), l'au moins un microcanal étant fourni avec un rapport surface sur volume compris entre 500 et 600 000 m⁻¹.
